# EUROPEAN PATENT APPLICATION

(11) **EP 2 849 270 A1**
(43) Date of publication of application: **18.03.2015**
(21) Application number: 13788238.7
(22) Date of filing: 10.05.2013
(51) Int. Cl.: H01M 4/96, H01M 4/88, H01M 12/06, H01M 8/10

(54) **CONDUCTIVE POROUS LAYER FOR BATTERY, AND MANUFACTURING METHOD FOR SAME**

(30) Priority: 11.05.2012 JP 2012109986
(71) Applicant: Dai Nippon Printing Co., Ltd., Tokyo 162-8001 (JP)
(72) Inventor: OI, Kasumi, Tokyo 162-8001 (JP); TAKEUCHI, Naoya, Tokyo 162-8001 (JP); KISHIMOTO, Hiroshi, Tokyo 162-8001 (JP); OHTANI, Hitoshi, Tokyo 162-8001 (JP)
(74) Representative: Vossius & Partner
(86) International application number: PCT/JP2013/063215
(87) International publication number: WO 2013/168810

(57) **Abstract**

An object of the present invention is to provide a conductive porous layer for batteries in which adhesion between a conductive porous substrate and the conductive porous layer is excellent, and pores in the conductive porous layer are maintained without being deformed.

The conductive porous layer for batteries of the present invention contains a laminate containing a first conductive layer and a second conductive layer, the first conductive layer including a conductive carbon material and a polymer, and the second conductive layer including a conductive carbon material and a polymer, and the polymer contained in the first conductive layer having a glass transition temperature (Tg) 30°C or more higher than the glass transition temperature (Tg) of the polymer contained in the second conductive layer.

## Description

### Technical Field

The present invention relates to a conductive porous layer for batteries and a production method thereof. When used for fuel cells and metal-air batteries, the conductive porous layer for batteries of the present invention can be used as a gas diffusion layer.

### Background Art

Electrochemical cells, such as fuel cells and metal-air batteries, which use gas in an electrode reaction, are provided with a conductive porous layer to improve the battery performance thereof.

The membrane-electrode assembly (MEA) used as a component of a solid polymer fuel cell has a structure wherein a conductive porous layer, a catalyst layer, an ion-conductive solid polymer electrolyte membrane, a catalyst layer, and a conductive porous layer are sequentially laminated.

This conductive porous layer is generally formed by using a conductive porous substrate, such as carbon paper or carbon cloth. To enhance the conductivity, gas diffusivity, water drainability, etc., of the conductive porous substrate, a conductive layer comprising conductive carbon particles, a water-repellent resin, etc., may be formed on a conductive porous substrate.

Conventional conductive porous layers are formed by applying a conductive layer-forming paste composition to a conductive porous substrate having a surface roughness of about tens of µm, such as carbon paper or carbon cloth, and then drying (for application methods, see Patent Literature (PTL) 1 and 2). Another method for producing a conductive porous layer comprises forming a conductive layer on a transfer film, then pressure-welding the conductive layer onto the conductive porous substrate, and removing the transfer film, by a transfer method. However, compared to the above application methods, this method is insufficient in terms of adhesion between the conductive porous substrate and the conductive layer, leaving room for improvement in battery performance, etc. The above problem exists not only for conductive porous layers used for solid polymer fuel cells, but also for conductive porous layers used for metal-air batteries, etc.

### Citation List

### Patent Literature

PTL 1: JP2006-278037A
PTL 2: JP2006-339018A

### Summary of Invention

### Technical Problem

An object of the present invention is to provide a conductive porous layer having good adhesion between the first conductive layer and the second conductive layer.

### Solution to Problem

In view of the above problems, the present inventors carried out extensive research to impart desired properties to a conductive porous layer for batteries. As a result, the inventors found that a conductive porous layer for batteries that can solve the above problems can be provided by using the first conductive layer and the second conductive layer each having a specific polymer. The present invention was accomplished based on this finding. Specifically, a conductive porous layer for batteries having good adhesion between the first conductive layer and the second conductive layer can be produced by selecting the types of polymers contained in the first conductive layer and the second conductive layer in a manner such that the polymer in the first conductive layer has a glass transition temperature (Tg) 30°C or more higher than the glass transition temperature (Tg) of the polymer contained in the second conductive layer.

That is, the present invention provides the following conductive porous layer for batteries and the production method thereof.
Item 1. A conductive porous layer for batteries comprising a laminate comprising a first conductive layer and a second conductive layer,
   the first conductive layer containing a conductive carbon material and a polymer,
   the second conductive layer containing a conductive carbon material and a polymer, and
   the polymer contained in the first conductive layer having a glass transition temperature (Tg) higher than the glass transition temperature (Tg) of the polymer contained in the second conductive layer.
Item 1-1. The conductive porous layer for batteries according to Item 1, wherein the glass transition temperature (Tg) of the polymer contained in the first conductive layer is 30°C or more higher than the glass transition temperature (Tg) of the polymer contained in the second conductive layer.
Item 2. The conductive porous layer for batteries according to Item 1 or 1-1, wherein the glass transition temperature (Tg) of the polymer contained in the first conductive layer is -100 to 300°C, and the glass transition temperature (Tg) of the polymer contained in the second conductive layer is -100 to 300°C.
Item 3. The conductive porous layer for batteries according to any one of Items 1 to 2, wherein the glass transition temperature (Tg) of the polymer contained in the first conductive layer is 50°C or more higher than the glass transition temperature (Tg) of the polymer contained in the second conductive layer.
Item 4. The conductive porous layer for batteries according to any one of Items 1 to 3, wherein the conductive carbon material contained in the first conductive layer and the conductive carbon material contained in the second conductive layer each have an average fiber diameter and/or average particle diameter satisfying any one of the following conditions (i) to (iv):
   (i) the conductive carbon material contained in the first conductive layer comprises conductive carbon fibers, the conductive carbon material contained in the second conductive layer comprises conductive carbon fibers, and the average fiber diameter of the conductive carbon fibers contained in the second conductive layer is larger than the average fiber diameter of the conductive carbon fibers contained in the first conductive layer;
   (ii) the conductive carbon material contained in the first conductive layer comprises conductive carbon particles, the conductive carbon material contained in the second conductive layer comprises conductive carbon fibers, and the average fiber diameter of the conductive carbon fibers contained in the second conductive layer is larger than the average particle diameter of the conductive carbon particles contained in the first conductive layer;
   (iii) the conductive carbon material contained in the first conductive layer comprises conductive carbon fibers, the conductive carbon material contained in the second conductive layer comprises conductive carbon particles, and the average particle diameter of the conductive carbon particles contained in the second conductive layer is larger than the average fiber diameter of the conductive carbon fibers contained in the first conductive layer; and
   (iv) the conductive carbon material contained in the first conductive layer comprises conductive carbon particles, the conductive carbon material contained in the second conductive layer comprises conductive carbon particles, and the average particle diameter of the conductive carbon particles contained in the second conductive layer is larger than the average particle diameter of the conductive carbon particles contained in the first conductive layer.
Item 5. The conductive porous layer for batteries according to any one of Items 1 to 4, wherein the second conductive layer has a pore diameter peak higher than the pore diameter peak of the first conductive layer.
Item 6. The conductive porous layer for batteries according to any one of Items 1 to 5 satisfying at least one of the following conditions (A) and (B):
   (A) the polymer in the first conductive layer is present with a higher density at the surface in contact with the second conductive layer than at the surface not in contact with the second conductive layer, and
   (B) the polymer in the second conductive layer is present with a higher density at the surface in contact with the first conductive layer than at the surface not in contact with the first conductive layer.
Item 7. The conductive porous layer for batteries according to Item 6 satisfying both of the conditions (A) and (B).
Item 8. The conductive porous layer for batteries according to any one of Items 1 to 5 satisfying both of the following conditions (A') and (B'):
   (A') the polymer in the first conductive layer is present with a higher density at the surface not in contact with the second conductive layer than at the surface in contact with the second conductive layer, and
   (B') the polymer in the second conductive layer is present with a higher density at the surface not in contact with the first conductive layer than at the surface in contact with the first conductive layer.
Item 9. The conductive porous layer for batteries according to any one of Items 1 to 8, wherein the conductive porous layer for batteries is a gas diffusion layer for fuel cells or a conductive porous layer for metal-air batteries.
Item 10. A method for producing a conductive porous layer for batteries, comprising the steps of:
   (I) producing a first conductive layer using a first conductive layer-forming paste composition containing a conductive carbon material and a polymer, and
   (II) producing a second conductive layer using a second conductive layer-forming paste composition containing a conductive carbon material and a polymer,
   the polymer contained in the first conductive layer having a glass transition temperature (Tg) higher than the glass transition temperature (Tg) of the polymer contained in the second conductive layer.
Item 10-1. The method according to Item 10, wherein the glass transition temperature (Tg) of the polymer contained in the first conductive layer is 30°C or more higher than the glass transition temperature (Tg) of the polymer contained in the second conductive layer.
Item 11. The method according to Item 10 or 10-1, wherein the glass transition temperature (Tg) of the polymer contained in the first conductive layer is 50°C or more higher than the glass transition temperature (Tg) of the polymer contained in the second conductive layer.
Item 12. A membrane-electrode assembly for fuel cells comprising a catalyst layer laminated membrane and at least one of the conductive porous layer for batteries according to any one of Items 1 to 9,
   the catalyst layer laminated membrane comprising a catalyst layer, an electrolyte membrane, and a catalyst layer that are sequentially laminated,
   the conductive porous layer for batteries being disposed on one side or both sides of the catalyst layer laminated membrane.
Item 13. A battery comprising the membrane-electrode assembly for fuel cells according to Item 12.

In the production of a conductive layer using a polymer as in the present invention, keeping the shape of pores in the conductive porous layer to the greatest extent possible, and maintaining high gas diffusivity of the conductive porous layer during the bonding of the first conductive layer and the second conductive layer by hot pressing, or the bonding of a conductive layer and another material by hot pressing, have been desired. However, the use of the same type of polymer in the first and second conductive layers problematically results in the deformation of pores in the first and second conductive layers during bonding by hot pressing, and also reduces the diffusivity. In one embodiment of the present invention (particularly, an embodiment in which a conductive carbon material larger than the conductive carbon material in the first conductive layer is used as the conductive carbon material in the second conductive layer, the second conductive layer having a polymer with a glass transition temperature (Tg) 30°C or more lower than that of the polymer in the first conductive layer), however, the first conductive layer and the second conductive layer, or a conductive layer and another material can be bonded without substantially deforming pores in the first conductive layer. Consequently, a conductive porous layer having excellent gas diffusivity and water drainability can be produced.

### 1. Conductive Porous Layer for Batteries

The conductive porous layer for batteries of the present invention comprises a laminate containing a first conductive layer and a second conductive layer. The first conductive layer contains a conductive carbon material and a polymer, and the second conductive layer contains a conductive carbon material and a polymer.

The characteristic of the present invention is such that the glass transition temperature (Tg) of the polymer contained in the first conductive layer is 30° or more higher than the glass transition temperature (Tg) of the polymer contained in the second conductive layer.

There is no particular limitation on the type of battery for which the conductive porous layer of the present invention is used insofar as the battery uses a gas as an active material of a negative or positive electrode. Examples of such batteries include fuel cells, metal-air batteries, and the like.

### <First Conductive Layer>

The first conductive layer contains a conductive carbon material and a polymer. Although the thickness of the first conductive layer is not limited, the preferable thickness is typically about 1 µm to 200 µm, and particularly preferably about 5 µm to 150 µm. In the present invention, provision of the first conductive layer can form a conductive porous layer having excellent gas diffusivity, gas permeability, water control properties, etc.

### Conductive Carbon Material

Examples of conductive carbon materials include, but are not limited to, conductive carbon particles, conductive carbon fibers, and the like.

### [Conductive Carbon Particles]

Any carbon material that is conductive may be used as conductive carbon particles, and known or commercially available materials can be used. Examples of such carbon materials include carbon blacks, such as channel black, furnace black, ketjen black, acetylene black, and lamp black; graphite; active charcoal; and the like. Such carbon materials can be used singly, or in a combination of two or more. The incorporation of such conductive carbon particles can enhance the conductivity of the conductive porous layer.

When a carbon black is used as conductive carbon particles, the average particle diameter (arithmetic average particle diameter) of the carbon black is not limited. The preferable average particle diameter thereof is typically about 5 nm to 200 nm, and particularly preferably about 5 nm to 100 nm. When a carbon black aggregate is used, the preferable average particle diameter thereof is about 10 to 600 nm, and particularly preferably about 50 to 500 nm. When graphite, active charcoal, or the like is used, the preferable average particle diameter thereof is about 500 nm to 40 µm, and particularly preferably about 1 µm to 35 µm. The average particle diameter of the conductive carbon particles is measured by an LA-920 particle size distribution analyzer, produced by Horiba, Ltd.

### [Conductive Carbon Fibers]

Incorporation of conductive carbon fibers can improve the quality of the surface coated with the first conductive layer-forming paste composition, and can also provide a sheet-like first conductive layer with high strength. Examples of conductive carbon fibers that can be used in the first conductive layer include, but are not limited to, vapor-grown carbon fibers (VGCF (registered trademark)), carbon nanotubes, carbon nanocaps, carbon nanowalls, and the like. These conductive carbon fibers can be used singly, or in a combination of two or more.

The fiber diameter of the conductive carbon fibers is not particularly limited. The preferable average fiber diameter thereof is about 50 to 450 nm, and particularly preferably about 100 to 250 nm. The use of the conductive carbon fibers having such an average fiber diameter can increase the nanometric pore volume, and is expected to provide effects of gas permeability, smoothness, water control properties, such as water drainability and retainability, etc. The fiber length of the conductive carbon fibers is also not limited. The preferable average fiber length thereof is about 4 to 500 µm, particularly about 4 to 300 µm, more preferably about 4 to 50 µm, and particularly preferably about 10 to 20 µm. The preferable average aspect ratio thereof is about 5 to 600, and particularly preferably about 10 to 500. The fiber diameter, fiber length, and aspect ratio of the conductive carbon fibers are measured from images measured under a scanning electron microscope (SEM), etc.

### Polymer

The polymer is not particularly limited, and known or commercially available materials can be used as long as the polymer has a glass transition temperature (Tg) 30°C or more higher than that of the polymer contained in the second conductive layer. The polymer preferably has a Tg of about -100 to 300°C, and more preferably -60 to 250°C. Specific examples of the polymer include ion-conductive polymer resins (e.g., Nafion), vinyl acetate resins, styrene-acrylic copolymer resins, styrene-vinyl acetate copolymer resins, ethylene-vinyl acetate copolymer resins, polyester-acrylic copolymer resins, urethane resins, acrylic resins, phenolic resins, polyvinylidene fluoride (PVDF), polyvinylacetal resins, and the like. Other examples thereof include hexafluoropropylene-vinylidene fluoride copolymers; trifluorochloroethylene-vinylidene fluoride copolymers, and like fluororubbers; silicone rubbers; and the like. Such polymers may be used singly, or in a combination of two or more.

The use of an elastomer, such as fluororubber, as a polymer can increase the flexibility of the first conductive layer, and can also further increase its adhesion to other layers due to the low Tg of the elastomer. In this specification, the term "fluororubber" refers to a material having a Tg of about -30 to 100°C.

As the elastomer, an elastomer emulsion (a suspension in which elastomer particles are dispersed) may be used, or an elastomer dissolved in a solvent may be used. In the case of using an elastomer emulsion, it is preferable to prepare an emulsion by dispersing an elastomer in a solvent, or by using a commercially available product. Examples of the solvent include water, ethanol, propanol, and the like. Examples of the solvent used when an elastomer dissolved in a solvent is used include N-methylpyrrolidone (NMP), methyl ethyl ketone (MEK), toluene, vinyl acetate, dimethylacetamide (DMA), isopropyl alcohol (IPA), and the like.

To impart water repellency to the first conductive layer, a water-repellent resin, such as a fluororesin, may be used. In particular, when a polymer with poor water repellency is used as the polymer, the use of a water-repellent resin is effective for increasing water repellency. Examples of such fluororesins include polytetrafluoroethylene resin (PTFE), fluorinated ethylene propylene resin (FEP), perfluoroalkoxy resin (PFA), and the like.

In the present invention, the first conductive layer-forming paste composition may comprise a dispersant, organic solvents such as alcohol and ketone, solvents such as water, etc., in addition to the above conductive carbon material and polymer, as long as the effect of the present invention is not impaired.

### Dispersant

The dispersant may be any dispersant that can disperse conductive carbon particles, a polymer, etc., in water. Known or commercially available dispersants can be used. Examples of such dispersants include nonionic dispersants, such as polyoxyethylene distyrenated phenyl ether, polyoxyethylene alkylene alkyl ether, and polyethylene glycol alkyl ether; cationic dispersants, such as alkyltrimethylammonium salts, dialkyl dimethyl ammonium chlorides, and alkylpyridinium chlorides; and anionic dispersants, such as polyoxyethylene fatty acid esters and acidic group-containing structure-modified polyacrylate. Such dispersants may be used singly, or in a combination of two or more.

### Solvent

The solvent is not particularly limited, and known or commercially available solvents can be used. Examples of such solvents include monohydric or polyhydric alcohols having about 1 to 5 carbon atoms. Specific examples thereof include alcohols, such as methanol, ethanol, 1-propanol, isopropanol, 1-butanol, and 1-pentanol; ketones, such as meethylethylketone; water, etc.

### <Second Conductive Layer>

The second conductive layer contains a conductive carbon material and a polymer. Although the thickness of the second conductive layer is not limited, the preferable thickness is typically about 30 µm to 300 µm, and particularly preferably about 50 µm to 250 µm. In the present invention, by forming the second conductive layer, a conductive porous layer having excellent membrane strength, gas permeability, and gas diffusivity can be formed.

### Conductive Carbon Material

Examples of conductive carbon materials include, but are not limited to, conductive carbon particles, conductive carbon fibers, and the like.

### [Conductive Carbon Particles]

The second conductive layer having high gas permeability and gas diffusivity can be produced by using conductive carbon particles. Examples of the conductive carbon particles used in the second conductive layer include graphite, active charcoal, etc.

The particle diameter of the conductive carbon particles is not particularly limited. The preferable average is about 5 µm to 100 µm, and particularly preferably about 6 µm to 80 µm. The average particle diameter of the conductive carbon particles is measured by an LA-920 particle size distribution analyzer, produced by Horiba, Ltd.

### [Conductive Carbon Fibers]

Incorporation of conductive carbon fibers can provide a sheet-like second conductive layer with high strength. Examples of conductive carbon fibers that can be used in the second conductive layer include, but are not limited to, PAN (polyacrylonitrile)-based carbon fibers, pitch-based carbon fibers, and the like.

The fiber diameter of the conductive carbon fibers is not particularly limited. The preferable average is about 5 µm to 20 µm, and particularly preferably about 6 µm to 15 µm. The use of conductive carbon fibers having such an average fiber diameter can produce a high-strength film; and furthermore, the formation of pores having a micrometric diameter can provide high gas permeability. The fiber length of the conductive carbon fibers is not particularly limited. The preferable average fiber length thereof is 5 µm to 1 mm, and particularly preferably about 10 µm to 600 µm. The preferable average aspect ratio thereof is about 1 to 50, and particularly preferably about 2 to 40. The fiber diameter, fiber length, and aspect ratio of the conductive carbon fibers are measured from images under a scanning electron microscope (SEM), etc.

Such conductive carbon fibers can be used singly, or in a combination of two or more. When two or more types of conductive carbon materials are used, both of the conductive carbon fibers and conductive carbon particles can be used.

### Polymer

The materials used in the first conductive layer section can be used as polymers. That is, the polymer preferably has a Tg of about -100 to 300C°, more preferably -60 to 250C°, and most preferably about -20 to 100C°. Specific examples of the polymer include ion-conductive polymer resins (e.g., Nafion), vinyl acetate resins, styrene-acrylic copolymer resins, styrene-vinyl acetate copolymer resins, ethylene-vinyl acetate copolymer resins, polyester-acrylic copolymer resins, urethane resins, acrylic resins, phenolic resins, polyvinylidene fluoride (PVDF), polyvinyl acetal resins, and the like. Other examples thereof include hexafluoropropylene-vinylidene fluoride copolymers; trifluorochloroethylene-vinylidene fluoride copolymers, and like fluororubbers; silicone rubbers; and the like. Such polymers may be used singly, or in a combination of two or more.

In the present invention, the second conductive layer-forming paste composition may comprise a fluororesin, dispersant, solvent, etc., in addition to the above conductive carbon material and polymer, as long as the effect of the present invention is not impaired. Usable fluororesins, dispersants, and solvents may be the same materials as used in the first conductive layer.

### <Characteristics of the First Conductive Layer and the Second Conductive Layer>

The characteristics of the first conductive layer and the second conductive layer of the present invention are such that the glass transition temperature (Tg) of the polymer contained in the first conductive layer is 30°C or more higher than the glass transition temperature (Tg) of the polymer contained in the second conductive layer.

In the present invention, it is preferable that the Tg of the polymer contained in the first conductive layer be -100 to 300°C, the Tg of the polymer contained in the second conductive layer be -100 to 300°C, and the glass transition temperature (Tg) of the polymer contained in the first conductive layer be 30°C or more higher than the Tg of the polymer contained in the second conductive layer.

Although the polymer having a Tg between about -100 to 300°C can be selected as the polymer contained in the first conductive layer and the polymer contained in the second conductive layer, it is important that polymers be selected so that the polymer contained in the first conductive layer has a Tg 30°C or more higher than the Tg of the polymer contained in the second conductive layer.

In the present invention, the Tg of the polymer contained in the first conductive layer is preferably 50°C or more, and more preferably 80°C or more higher than the Tg of the polymer contained in the second conductive layer. The greater the difference between the Tg of the polymer contained in the first conductive layer and the Tg of the polymer contained in the second conductive layer, the higher the adhesion between the first conductive layer and the second conductive layer of the conductive porous layer. Although the upper limit of the difference between the Tg of the polymer contained in the first conductive layer and the Tg of the polymer contained in the second conductive layer is not particularly limited, it is typically about 500°C.

In the present invention, when two or more polymers are used in combination in the first conductive layer or the second conductive layer, the Tg of the polymer contained in the largest amount is considered to be the Tg of the polymer in the conductive layer.

The average fiber diameters and/or average particle diameters of the conductive carbon material contained in the first conductive layer and the conductive carbon material contained in the second conductive layer preferably satisfy one of the following conditions (i) to (iv). When the conditions are satisfied, the pore diameter of the second conductive layer becomes larger than the pore diameter of the first conductive layer, and even when pores of the second conductive layer are deformed during adhesion between the first conductive layer and the second conductive layer, or adhesion between the second conductive layer and another material, such as a separator, the gas permeability and diffusivity required for a conductive porous layer can be ensured. Thus, the effect of the present invention such that the adhesion between the first conductive layer and the second conductive layer in the conductive porous layer of the present invention is high, and the pores of the first conductive layer efficiently perform predetermined functions without being deformed can be exhibited more efficiently.
(i) The conductive carbon material contained in the first conductive layer comprises conductive carbon fibers, the conductive carbon material contained in the second conductive layer comprises conductive carbon fibers, and the average fiber diameter of the conductive carbon fibers contained in the second conductive layer is larger than the average fiber diameter of the conductive carbon fibers contained in the first conductive layer;
(ii) The conductive carbon material contained in the first conductive layer comprises conductive carbon particles, the conductive carbon material contained in the second conductive layer comprises conductive carbon fibers, and the average fiber diameter of the conductive carbon fibers contained in the second conductive layer is larger than the average particle diameter of the conductive carbon particles contained in the first conductive layer;
(iii) The conductive carbon material contained in the first conductive layer comprises conductive carbon fibers, the conductive carbon material contained in the second conductive layer comprises conductive carbon particles, and the average particle diameter of the conductive carbon particles contained in the second conductive layer is larger than the average fiber diameter of the conductive carbon fibers contained in the first conductive layer; and
(iv) The conductive carbon material contained in the first conductive layer comprises conductive carbon particles, the conductive carbon material contained in the second conductive layer comprises conductive carbon particles, and the average particle diameter of the conductive carbon particles contained in the second conductive layer is larger than the average particle diameter of the conductive carbon particles contained in the first conductive layer.

In the present invention, the pore diameter peak of the second conductive layer is preferably larger than the pore diameter peak of the first conductive layer. The pore diameter peak in the present specification was obtained as follows. The diameter and volume of pores were measured using an Autopore IV9520 pore distribution measurement device produced by Micromeritics (Shimadzu Corporation). The relationship between the pore diameter and pore volume was made into a graph based on the obtained values, and the pore diameter at which the pore volume became maximum was obtained as the "pore diameter peak." In the present invention, the case where the conductive layer includes both conductive carbon particles and conductive carbon fibers also followed the above measurement standards.

In the present invention, the pore diameter distribution of the first conductive layer is preferably such that the volume of pores having a diameter of 10 nm to 5 µm, and preferably 20 nm to 5 µm, accounts for at least 50% of the total pore volume. The pore diameter distribution is measured by an AutoPore IV 9500 automatic porosimeter (produced by Shimadzu Corporation). The above-mentioned pore diameter distribution can be achieved by using, for example, conductive carbon fibers with an average fiber diameter of about 50 to 450 nm, a polymer, conductive carbon particles with an average particle diameter (arithmetic average particle diameter) of 5 to 200 nm, and conductive carbon particles (e.g., graphite, active charcoal, etc.) with an average particle diameter of 500 nm to 40 µm.

The pore diameter distribution of the second conductive layer is preferably such that the volume of pores having a diameter of 5 to 100 µm, and preferably 5 to 50 µm, accounts for at least 50% of the total pore volume. The above pore diameter distribution can be achieved, for example, by using conductive carbon fibers with an average fiber diameter of 5 µm or more, conductive carbon particles with an average particle diameter of 5 µm or more, a polymer, etc.

In the present invention, it is desirable that the layers have different densities of the polymer component between the front and back surfaces to bond the first conductive layer and the second conductive layer at low temperatures. This feature is also desirable to consequently improve gas diffusivity and battery performance. That is, the first conductive layer or the second conductive layer preferably has a polymer at one side surface with a higher density than at the opposite side surface thereof. In the present invention, when two or more polymers mentioned above are contained, at least one polymer is preferably present with a higher density at one side surface than at the opposite side surface thereof. The distribution state of the polymer component in the first and second conductive layers is confirmed by analyzing both surfaces of each layer using energy-dispersive X-ray fluorescence spectrometry, etc. The distribution of the polymer component can also be analyzed by energy-dispersive X-ray fluorescence analysis in the layer's cross-sectional direction. When the element specific to the polymer cannot be detected by energy-dispersive X-ray fluorescence analysis, for example, in the case of using a styrene-acrylic acid rubber, the functional group resulting from the polymer is observed by a Fourier transform infrared spectrophotometer, etc.

### <Method for Producing the First Conductive Layer and the Second Conductive Layer>

The first conductive layer of the present invention can be obtained, for example, by applying the first conductive layer-forming paste composition containing a conductive carbon material and a polymer to a substrate, and drying the composition; and then detaching the substrate. The second conductive layer can also be obtained by applying the second conductive layer-forming paste composition containing a conductive carbon material and a polymer to a substrate, and drying the composition; and then detaching the substrate.

The above method advantageously reduces the thicknesses of the first conductive layer and the second conductive layer.

According to the production method above, the proportion of the polymer component that is present at the surfaces of the first and second conductive layers can be adjusted by utilizing the phenomenon, occurring during the drying of the paste composition, in which the polymer component contained in the first conductive layer-forming paste composition or in the second conductive layer-forming paste composition segregates from the side not in contact with the substrate toward the side in contact with the substrate. That is, the density of the polymer component at one side surface can be increased by adjusting the amount of polymer used, the viscosity of the paste composition, the particle diameter in the case of using an elastomer emulsion as a polymer, the drying time, the specific gravity of the conductive carbon material (e.g., conductive carbon particles, conductive carbon fibers, etc.), the functional group present at the surface of the conductive carbon material (e.g., conductive carbon particles, conductive carbon fibers, etc.), and the like. In particular, as the viscosity of the paste composition lowers and the drying time lengthens, the resin tends to segregate.

### Content

The first conductive layer-forming paste composition may comprise, for example, about 30 to 200 parts by weight (particularly, 40 to 150 parts by weight) of a polymer, about 0 to 100 parts by weight (particularly, 5 to 50 parts by weight) of a dispersant, about 0 to 1,100 parts by weight (particularly, 100 to 1,000 parts by weight) of a solvent, such as alcohol, based on 100 parts by weight of conductive carbon particles (the total amount of conductive carbon particles and conductive carbon fibers, when conductive carbon fibers are contained). When conductive carbon particles and conductive carbon fibers are both contained, the preferable ratio of conductive carbon particles to conductive carbon fibers is in the range of about 9:1 to 1:9 (weight ratio), and particularly preferably about 8:2 to 2:8 (weight ratio). To enhance water repellency, the composition may contain a fluororesin in an amount of about 5 to 250 parts by weight (particularly, 10 to 200 parts by weight). When an elastomer emulsion is used as a polymer, the solids content is preferably within the above-mentioned range. When the first conductive layer-forming paste composition includes a resin component having a Tg outside the range of -100 to 300°C, the ratio of the polymer having a Tg of -100 to 300°C and the resin component having a Tg outside the range of -100 to 300°C is about 9.5:0.5 to 4:6 (weight ratio), and preferably about 9:1 to 5:5 (weight ratio).

The second conductive layer-forming paste composition may comprise, for example, about 5 to 150 parts by weight (particularly, 10 to 100 parts by weight) of a polymer, about 0 to 100 parts by weight (particularly, 5 to 50 parts by weight) of a dispersant, about 0 to 500 parts by weight (particularly, 10 to 400 parts by weight) of a solvent, such as alcohol, based on 100 parts by weight of conductive carbon materials. When conductive carbon fibers and conductive carbon particles are both contained, the preferable ratio of conductive carbon fibers to conductive carbon particles is in the range of about 9:1 to 1:9 (weight ratio), and particularly preferably about 8:2 to 2:8 (weight ratio). When an elastomer emulsion is used as a polymer, the solids content is preferably within the above-mentioned range. When the second conductive layer-forming paste composition includes a resin component having a Tg outside the range of -100 to 300°C, the ratio of the polymer having a Tg of -100 to 300°C and the resin component having a Tg outside the range of -100 to 300°C is about 9:1 to 4:6 (weight ratio), and preferably about 8:2 to 5:5 (weight ratio).

The substrate is not particularly limited insofar as the paste composition can be applied thereto. Known or commercially available substrates can be widely used. Examples of substrates include polyimide, polyethylene terephthalate, polyparabanic acid aramid, polyamide (nylon), polysulfone, polyether sulphone, polyphenylene sulfide, polyether ether ketone, polyether imide, polyarylate, polyethylene naphthalate, polypropylene, and like polymeric films. Further, ethylene-tetrafluoroethylene copolymers (ETFE), tetrafluoroethylene-hexafluoropropylene copolymers (FEP), tetrafluoro-fluoro alkyl vinyl ether copolymer (PFA), polytetrafluoroethylene (PTFE), or the like can also be used. Among these, polymeric films that are highly heat-resistant and easily available are preferable. For example, polyethylene terephthalate, polyethylene naphthalate, polytetrafluoroethylene (PTFE), polyimide, and like films are preferable.

The substrate preferably has a release layer formed thereon. For example, the release layer may comprise a known wax. As a substrate having a release layer formed thereon, a film coated with SiOx, a fluororesin, or the like may be used.

It is preferable from the viewpoint of ease of handling and cost efficiency that the thickness of the substrate be typically about 6 to 100 µm, and particularly preferably about 10 to 60 µm.

The coating method of each paste composition is preferably application using known or commercially available doctor blades and like blades; wire bars; squeegees, and like instruments; applicators; die coaters; etc.

The amount of each paste composition to be applied is not particularly limited. For example, the paste composition is preferably applied in such an amount that the first conductive layer has a thickness of about 1 to 150 µm, and preferably about 5 to 100 µm; and that the second conductive layer after drying has a thickness of about 1 to 300 µm, and preferably about 50 to 250 µm.

The drying conditions are also not limited. The drying conditions can be suitably changed according to the conditions, such as the volatilization temperature of the solvent used (e.g., alcohol) (for example, about 150°C), and the glass transition temperature of the polymer.

After the first conductive layer and second conductive layer are obtained by drying, the layers may be further subjected to drying at a higher temperature (e.g., about 150 to 500°C), if necessary.

Further, the first conductive layer and second conductive layer may be treated on the surface (in particular, on the surface in contact with another layer). Examples of the surface treatment include mechanical treatment to physically roughen the surface by a metallic brush, sandblasting, or the like, matting treatment, corona discharge treatment, plasma discharge treatment, ultraviolet treatment, electron irradiation treatment, flame treatment, etc. For example, in the corona treatment, the inter electrode distance is 0.3 to 5 mm, the discharge energy is 0.5 to 5 kW, a silicone rubber covering electrode is used as an electrode, and a sample is irradiated at the rate of 0.1 to 50 m/min.

### <Characteristics of the Conductive Porous Layer for Batteries>

The conductive porous layer for batteries of the present invention comprises a laminate comprising the aforementioned first conductive layer and second conductive layer.

The first conductive layer and the second conductive layer are laminated in such a manner as to satisfy at least one of (preferably both of) the following conditions:
(A) The polymer in the first conductive layer is present with a higher density at the surface in contact with the second conductive layer than at the surface not in contact with the second conductive layer; and
(B) The polymer in the second conductive layer is present with a higher density at the surface in contact with the first conductive layer than at the surface not in contact with the first conductive layer.

Specifically, the first conductive layer and the second conductive layer are desirably laminated in such a manner as to satisfy at least one of the following conditions (preferably satisfy condition (b)):
(a) The polymer in the first conductive layer is present with a higher density at the surface not in contact with the second conductive layer than at the surface in contact with the second conductive layer, and the polymer in the second conductive layer is present with a higher density at the surface in contact with the first conductive layer than at the surface not in contact with the first conductive layer;
(b) The polymer in the first conductive layer is present with a higher density at the surface in contact with the second conductive layer than at the surface not in contact with the second conductive layer, and the polymer in the second conductive layer is present with a higher density at the surface in contact with the first conductive layer than at the surface not in contact with the first conductive layer; and
(c) The polymer in the first conductive layer is present with a higher density at the surface in contact with the second conductive layer than at the surface not in contact with the second conductive layer, and the polymer in the second conductive layer is present with a higher density at the surface not in contact with the first conductive layer than at the surface in contact with the first conductive layer.

Thus, in the present invention, one or both of the surfaces at which a polymer (at least one type of polymer when the first conductive layer contains a plurality of polymers) in the first conductive layer is present with a higher density, and the surface at which a polymer in the second conductive layer (at least one type of polymer when the second conductive layer contains a plurality of polymers) is present with a higher density are located at the interface between the first conductive layer and the second conductive layer. This can enhance the adhesion between the first conductive layer and the second conductive layer.

The first conductive layer and the second conductive layer may satisfy both of the following conditions:
(A') The polymer in the first conductive layer is present with a higher density at the surface not in contact with the second conductive layer than at the surface in contact with the second conductive layer; and
(B') The polymer in the second conductive layer is present with a higher density at the surface not in contact with the first conductive layer than at the surface in contact with the first conductive layer.

When the surface at which a polymer (at least one type of polymer when the first conductive layer contains a plurality of polymers) in the first conductive layer is present with a lower density, and the surface at which a polymer in the second conductive layer (at least one type of polymer when the second conductive layer contains a plurality of polymers) is present with a lower density are laminated, the adhesion between the second conductive layer and another material is excellent when the other material is brought into contact with the surface of the second conductive layer that is not in contact with the first conductive layer. Further, when the other material is brought into contact with the surface of the first conductive layer that is not into contact with the second conductive layer, the adhesion between the first conductive layer and the other material can be advantageously increased.

### <Method for Producing Conductive Porous Layer>

The conductive porous layer of the present invention can be produced by laminating a first conductive layer, a second conductive layer, and optionally one or more other layers, and performing hot-pressing.

For example, the conductive porous layer of the present invention is formed by the following steps.
(I) Producing a first conductive layer using a first conductive layer-forming paste composition containing a conductive carbon material and a polymer, and
(II) Producing a second conductive layer using a second conductive layer-forming paste composition containing a conductive carbon material and a polymer.

The produced conductive porous layer for batteries of the present invention may be stacked on one side or both sides of the catalyst layer laminated membrane, etc., described below, and bonded to produce a membrane-electrode assembly. Alternatively, the first conductive layer and the second conductive layer may be stacked in this order on one or both sides of the catalyst layer laminated membrane, etc., described below, to produce the conductive porous layer and membrane-electrode assembly of the present invention at the same time.

One example of the method for producing the conductive porous layer of the present invention is as follows.

The method for producing the conductive porous layer of the present invention includes the following steps:
(I) After a first conductive layer-forming paste composition containing a conductive carbon material and a polymer is applied to a substrate and dried, the resulting first conductive layer is detached from the substrate to produce a first conductive layer;
(II) After a second conductive layer-forming paste composition containing a conductive carbon material and a polymer is applied to a substrate and dried, the resulting second conductive layer is detached from the substrate to produce a second conductive layer; and
(III) The second conductive layer is disposed on the first conductive layer, and bonded by hot-pressing.

According to the above method, after the first conductive layer-forming paste composition is applied to the substrate, and dried, the first conductive layer is detached from the substrate, and the second conductive layer is laminated on the first conductive layer. Accordingly, variation in film thickness can be reduced compared to the case in which a composition is applied to conventionally used carbon paper, etc., and dried.

A preferable example of the method for producing the conductive porous layer of the present invention is as follows. First, the first conductive layer is formed by the following step. (I) After a first conductive layer-forming paste composition containing conductive carbon particles and a polymer (preferably a polymer having a glass transition temperature of -100 to 300°C, particularly preferably -30 to 220°C) is applied to a substrate and dried, the resulting first conductive layer is detached from the substrate to produce a first conductive layer having a polymer with a higher density at one side surface than at the opposite side surface thereof.

Subsequently, the second conductive layer is formed by the following step. (II) After a second conductive layer-forming paste composition containing a conductive carbon material and a polymer (a polymer having a glass transition temperature lower than that of the polymer in the first conductive layer, preferably a polymer having a glass transition temperature of -100 to 300°C, particularly preferably -30 to 220°C) is applied to a substrate and dried, the resulting second conductive layer is detached from the substrate to produce a second conductive layer having a polymer with a higher density at one side surface than at the opposite side surface thereof.

The conditions for producing the first conductive layer and the second conductive layer are as described above.

Further, the following step is performed to produce the conductive porous layer for batteries of the present invention.
(III) The first conductive layer and the second conductive layer are disposed in such a manner as to satisfy at least one of the following conditions:
   (A) The polymer in the first conductive layer is present with a higher density at the surface in contact with the second conductive layer than at the surface not in contact with the second conductive layer, and
   (B) The polymer in the second conductive layer is present with a higher density at the surface in contact with the first conductive layer than at the surface not in contact with the first conductive layer; and bonding is performed by hot-pressing.

The temperature of the hot-pressing in Step (III) is not particularly limited, and suitably determined according to the Tg of the polymer contained in the first conductive layer and the Tg of the polymer contained in the second conductive layer. For example, the hot-pressing temperature is within the range of 20 to 300°C, and preferably 25 to 200°C. The resulting conductive porous layer may be further subjected to drying at a higher temperature (e.g., about 150 to 500°C).

In another preferable example of the method for producing the conductive porous layer of the present invention, the first conductive layer and the second conductive layer are first produced as described above. The conditions for producing these layers, etc., are as follows.

The first conductive layer and the second conductive layer are disposed in such a manner as to satisfy both of the following conditions (A') and (B'):
(A') The polymer in the first conductive layer is present with a higher density at the surface not in contact with the second conductive layer than at the surface in contact with the second conductive layer, and
(B') The polymer in the second conductive layer is present with a higher density at the surface not in contact with the first conductive layer than at the surface in contact with the first conductive layer; and bonding is performed by hot-pressing.

The temperature conditions of the hot-pressing, and drying conditions may be the same as above.

When the first conductive layer and the second conductive layer are laminated by the above method, the interface may be previously treated. Examples of the surface treatment include mechanical treatment to physically roughen the surface by a metallic brush, sandblasting, or the like, matting treatment, corona discharge treatment, plasma discharge treatment, ultraviolet treatment, electron irradiation treatment, flame treatment, etc.

For example, in the corona treatment, the inter electrode distance is 0.3 to 5 mm, the discharge energy is 0.5 to 5 kW, a silicone rubber covering electrode is used as an electrode, and a sample is irradiated at the rate of 0.1 to 50 m/min.

### Conductive Porous Layer-Conductive Porous Substrate

A known or commercially available gas diffusion layer (carbon paper, carbon cloth, carbon felt, etc.) can be stacked as the conductive porous substrate on one side (e.g., on the second conductive layer) of the conductive porous layer of the present invention.

When the conductive porous layer and the conductive porous substrate are stacked, bonding may be performed by hot-pressing. For example, the first conductive layer and the second conductive layer may be bonded by hot-pressing to produce the conductive porous layer of the present invention, and then a conductive porous substrate may be disposed on the second conductive layer to perform bonding by hot pressing. Alternatively, the first conductive layer, the second conductive layer, and the conductive porous substrate at the second conductive layer side are disposed, and then bonded by hot-pressing.

For exemplary purposes with respect to the properties of typical carbon paper, the properties of TGP-H-060 produced by Toray Industries are shown below:
Thickness: 190 µm;
Electrical resistance: 80 mΩ·cm in the thickness direction,
5.8 mΩ·cm in the surface direction;
Porosity: 78%;
Bulk density: 0.44 g/cm³;
Surface roughness: 8 µm.
The thickness of the carbon paper, etc., is not limited. Preferably, the thickness is typically about 50 to 1,000 µm, and more preferably about 100 to 400 µm.

To suitably diffuse an oxidizing agent gas in a catalyst layer mentioned later, the conductive porous substrate may be a porous metallic body formed of a metal mesh, a metal foaming body, and the like. Use of the porous metal body further improves conductivity. Examples of metals used for the porous metal body include poor metals, such as nickel and palladium; silver; stainless steel; and the like. To improve corrosion resistance and conductivity, plate processing may be performed on the metal mesh and metal foaming body surface. The material of the plating is not limited, and examples include metals, such as platinum, ruthenium, rhodium, tungsten, tantalum, and gold, or alloys thereof; carbon; and composites of carbon and corrosion-resistant resins, such as epoxy resins and acrylic resins. Of these, gold is preferable from the viewpoint of high water repellency.

A conductive porous substrate previously subjected to a water-repellent treatment is preferably used. This can further enhance the water repellency of the conductive porous substrate.

The water-repellent treatment may be, for example, a method comprising immersing the conductive porous substrate in an aqueous dispersion of a fluororesin, etc. The fluororesin may be the aforementioned resin, or the like. In this method, a dispersant as mentioned above may be used to disperse a fluororesin in water, and an aqueous suspension containing a fluororesin and an aqueous dispersant is preferably used as the aqueous dispersion.

The amount of the fluororesin in the aqueous dispersion is not particularly limited and may be, for example, about 1 to 30 parts by weight, and preferably about 2 to 20 parts by weight, per 100 parts by weight of water.

### 3. Conductive Porous Layer-Separator

A known or commercially available separator may be stacked on one side (e.g., on the second conductive layer) of the conductive porous layer of the present invention.

When the conductive porous layer and the separator are stacked, bonding may be performed by hot-pressing. For example, the first conductive layer and the second conductive layer may be bonded by hot-pressing to produce the conductive porous layer of the present invention, and then a separator may be disposed on the second conductive layer to perform bonding by hot-pressing. Alternatively, the first conductive layer, the second conductive layer, and the separator at the second conductive layer side are disposed, and then bonded by hot-pressing.

A known or commercially available separator can be used as a separator.

The material of the separator is not particularly limited, and can be suitably selected according to its purpose. Examples include metals, such as stainless steel, copper, titanium, aluminum, rhodium, tantalum, and tungsten, or alloys including at least one of these metals; graphite; carbon compounds in which carbon is added into resin; and the like. Of these, from the viewpoint of strength, reduction in fuel cell thickness, conductivity, etc., the metals or alloys containing at least one of the metals are preferable, and titanium and stainless steel are more preferable.

To improve corrosion resistance and conductivity, plate processing can be performed on the surface of the separator. The material of the plate is not particularly limited, and examples include metals, such as platinum, ruthenium, rhodium, tungsten, tantalum, and gold, or alloys thereof; carbon; composites of carbon and corrosion-resistant resins, e.g., epoxy resins and acrylic resins; and the like. Of these, gold is preferable in view of high water repellency.

The separator includes a gas flow channel. The width, depth, shape, etc., of the gas flow channel are not particularly limited, and can be suitably selected according to its purpose as long as the gas flow channel flows hydrogen, air, etc., which are the fuels of a fuel cell, and discharges water generated by the reaction of the fuel cell to the exterior of the cell. The width is typically 0.1 mm to 2 mm (preferably 0.5 mm to 1.5 mm), and the depth is typically 0.05 mm to 2 mm (preferably 0.1 mm to 1 mm).

The gas flow channel may have an uneven surface or a flat surface. The gas flow channel preferably has an uneven surface from the viewpoint of improvement in water repellency. When the gas flow channel has an uneven surface, the surface roughness is preferably 5 nm to 200 nm, and more preferably 5 nm to 100 nm. The surface roughness in the present invention is the value measured according to JIS B 0601.

The separator preferably includes a water-repellent layer partially or wholly formed on the gas flow channel, and the water-repellent layer includes at least one member selected from sulfur and sulfur compounds.

In the separator, a phosphorous-containing layer is formed on at least a side of, preferably both sides of, and more preferably the entire surface of a metal plate constituting the separator. The phosphorous-containing layer protects the surface of the metal plate from the super acid-related corrosion of the solid polymer electrolyte.

The material constituting the phosphorous-containing layer varies depending on the types of metal plates, and the types of phosphorous compounds used for forming the phosphorous-containing layer.

Examples of the phosphorus compound used in the formation of the phosphorous-containing layer include known inorganic phosphorus compounds, such as condensed phosphoric acids, e.g., phosphoric acid and polyphosphoric acid, and the salts thereof. Examples of the salts include ammonium salts, alkali metal salts, such as sodium salts and potassium salts, and metal salts.

### 4. Membrane-Electrode Assembly for Batteries

The conductive porous layer for batteries of the present invention can also be used to produce a membrane-electrode assembly for batteries. More specifically, the second conductive layer side of the conductive porous layer of the present invention is preferably laminated on one side or both sides of the catalyst layer laminated membrane comprising one or two catalyst layers on one side or both sides of the electrolyte membrane. In this case, since the second conductive layer contains a polymer having a glass transition temperature (Tg) lower than that of the polymer contained in the first conductive layer, adhesion between the conductive porous layer and the catalyst layer is excellent. Further, the conductive layer with high smoothness improves the adhesion between the conductive layer and the catalyst layer. Accordingly, the conductive layer in which the pore volume is increased by adjusting the average particle diameter and/or average fiber diameter of the conductive carbon material contained in the conductive layer can be stacked on the catalyst layer.

When layers the conductive layer and the catalyst layer are stacked, bonding may be performed by hot-pressing. For example, the first conductive layer and the second conductive layer may be bonded by hot-pressing to produce the conductive porous layer of the present invention, and then a catalyst layer laminated membrane may be disposed on the second conductive layer to perform bonding by hot-pressing. Alternatively, the first conductive layer, the second conductive layer, and the catalyst layer laminated membrane at the second conductive layer side are disposed, and then bonded by hot-pressing.

### <Catalyst Layer Laminated Membrane>

### Electrolyte Membrane

The electrolyte membrane is not limited as long as it is a hydrogen ion-conductive electrolyte membrane or a hydroxide ion-conductive electrolyte membrane. Known or commercially available electrolyte membranes, such as hydrogen ion-conductive electrolyte membranes or hydroxide ion-conductive electrolyte membranes, can be used. Examples of hydrogen ion-conductive electrolyte membranes include the "Nafion" (registered trademark) membrane produced by Du Pont, Inc.; the "Flemion" (registered trademark) membrane produced by Asahi Glass Co., Ltd.; the "Aciplex" (registered trademark) membrane produced by Asahi Kasei Corporation; the "GoreSelect" (registered trademark) membrane produced by Gore & Assoc. Inc.; and the like. Examples of hydroxide ion-conductive electrolyte membranes include hydrocarbon electrolyte membranes, such as Aciplex (registered trademark) A-201, A-211, A-221, etc., produced by Asahi Kasei Corporation; Neosepta (registered trademark) AM-1 and AHA produced by Tokuyama Corporation; and the like. Examples of fluororesin electrolyte membranes include Tosflex (registered trademark) IE-SF34 produced by Tosoh Corporation; Fumapem (registered trademark) FAA produced by FuMA-Tech GmbH; and the like.

The preferable thickness of the electrolyte membrane is typically about 20 to 250 µm, and particularly preferably about 20 to 150 µm.

When the membrane-electrode assembly for batteries of the present invention is used for metal-air batteries, a gel or liquid electrolyte can be used in addition to solid electrolyte membranes. In this case, the materials used for the electrolyte are not particularly limited, and known or commercially available materials conventionally used for metal-air batteries can be used. For example, the electrolyte is selected according to the metal at the negative electrode, and water, a salt solution, an alkaline solution, a metal salt solution of the metal at the negative electrode, etc., can be suitably used.

### Catalyst Layer

As the catalyst layer, a known or commercially available platinum-containing catalyst layer (a cathode catalyst or an anode catalyst) can be used. Specifically, the catalyst layer is preferably formed of a dried product of the paste composition for forming a catalyst layer, comprising (1) carbon particles supporting catalyst particles and (2) a hydrogen ion-conductive polymer electrolyte (preferably a hydrogen ion-conductive polymer electrolyte).

Any catalyst particles that can cause an oxidation-reduction reaction (in the case of fuel cells, oxidation of hydrogen at the anode, and reduction of oxygen at the cathode; and in the case of metal-air batteries, reduction of oxygen at the positive electrode) and that have catalytic activity can be used as the catalyst particles. Examples of catalyst particles include platinum, platinum alloys, platinum compounds, and the like. Examples of platinum alloys include alloys of platinum and at least one metal selected from the group consisting of ruthenium, palladium, nickel, molybdenum, iridium, iron, and cobalt.

Examples of hydrogen ion-conductive polymer electrolytes include perfluorosulfonic acid-based fluorine ion-exchange resins. Specific examples thereof include perfluorocarbon sulfonic acid-based polymers (PFS-based polymers) in which a C-H bond of a hydrocarbon-based ion-exchange membrane is replaced with fluorine. In the catalyst layer, fluororesins and non-polymer-based fluorine materials, such as fluorinated pitch, fluorinated carbon, and graphite fluoride, can be added as a water repellent.

The thickness of the catalyst layer is not particularly limited. The thickness thereof is typically about 1 to 100 µm, and preferably about 2 to 50 µm.

In metal-air batteries, examples of the catalyst used for the positive electrode include, in addition to the catalysts used for anode and cathode catalysts above, manganese dioxide, gold, active charcoal, carbon black, iridium oxides, perovskite complex oxides, metal-containing pigments, etc. The catalyst powders thereof can be dispersed using a water repellent as a binder, and applied to form a catalyst layer. Alternatively, a material that can be vapor deposited is vapor deposited to form a catalyst layer. The catalyst layer can be also formed by reducing a metal salt solution on an electrode to deposit metal in a fine shape.

The metal at the negative electrode is selected depending on the type of the metal-air battery to be formed. Metals, such as lithium (Li), sodium (Na), potassium (K), magnesium (Mg), calcium (Ca), zinc (Zn), aluminum (Al), and iron (Fe), alloys, or metal compounds can be used as a negative-electrode active material. To increase the contact area of the negative electrode and the electrolyte, the negative electrode preferably has pores.

### Method for Producing Catalyst Layer Laminated Membrane

The catalyst layer laminated membrane can be produced, for example, by disposing a catalyst layer transfer film in a manner such that the catalyst layer and the electrolyte membrane are face-to-face, pressing the layers under heat to transfer the catalyst layer to the electrolyte membrane, and then detaching the transfer film. A catalyst layer laminated membrane comprising a catalyst layer on both sides of the electrolyte membrane can be produced by repeating this operation twice. In consideration of work efficiency, etc., simultaneously laminating the catalyst layer on both sides of the electrolyte membrane is preferable.

For the transfer, it is preferable to press the layers from the substrate film side of the catalyst layer transfer film using a known pressing machine, etc. To avoid poor transfer, the preferable pressure level is typically about 0.5 to 10 MPa, and particularly preferably about 1 to 8 MPa. To avoid poor transfer, the face to be pressed is preferably heated during the pressing operation. Preferably, the heating temperature is appropriately changed according to the type of electrolyte membrane to be used.

The substrate film is not particularly limited, and the same substrates as mentioned above can be used. Examples of substrate films include polymeric films, such as polyimide, polyethylene terephthalate (PET), polysulfone, polyether sulphone, polyphenylene sulfide, polyether ether ketone, polyether imide, polyarylate, polyethylene naphthalate (PEN), polyethylene, polypropylene, and polyolefin. Heat-resistant fluororesins, such as ethylene-tetrafluoroethylene copolymer (ETFE), tetrafluoroethylene-hexafluoropropylene copolymer (FEP), tetrafluoroethylene-perfluoroalkyl vinyl ether copolymer (PFA), and polytetrafluoroethylene (PTFE), can also be used. Among these, inexpensive and easily available polymeric films are preferable; and polyethylene terephthalate, etc., are more preferable.

In view of the workability, cost efficiency, etc., of forming the catalyst layer on the substrate film, the preferable thickness of the substrate film is typically about 6 to 150 µm, and particularly preferably about 12 to 75 µm.

The substrate film may have a release layer formed thereon. Examples of release layers include a layer comprising a known wax, a plastic film coated with known SiOx or a fluororesin, and the like. A substrate film comprising a film with high release properties formed thereon, such as a laminate of a PET substrate and a heat-resistant fluororesin substrate; and like structured substrate films, are also usable.

Other than the transfer method mentioned above, the catalyst layer can be formed on the electrolyte membrane by applying the catalyst layer-forming paste composition to the electrolyte membrane. In this case, known conditions can be used.

### 5. Battery

The battery of the present invention (e.g., solid polymer fuel cells, metal-air batteries, etc.) can be produced by providing a known or commercially available separator, terminals, etc., in the above membrane-electrode assembly or the conductive porous layer.

When the conductive porous layer of the present invention is used for metal-air batteries, the use is not particularly limited, and can be used, for example, in the following manner. The conductive porous layer of the present invention is stacked on one side of a positive electrode catalyst layer to form a positive electrode; and a negative electrode is disposed on the opposite side of the positive electrode catalyst layer via a separator. The space between the separator and the negative electrode catalyst layer (or between the negative electrode catalyst layer and the positive electrode catalyst layer) is filled with an electrolyte. In this case, the conductive porous layer of the present invention functions as a gas diffusion layer. Because the conductive porous layer of the present invention comprises a carbon material, it can be used without providing the aforementioned positive electrode catalyst layer. In this case, the conductive porous layer-forming layer functions as a catalyst layer and/or a gas diffusion layer.

The types of metal-air batteries include lithium-air batteries, sodium-air batteries, potassium-air batteries, magnesium-air batteries, calcium-air batteries, zinc-air batteries, aluminum-air batteries, and iron-air batteries. The metal-air battery may be a primary battery or a secondary battery. The materials used to form the positive electrode catalyst layer, negative electrode, electrolyte, separator, and support may be known or commercially available materials that are conventionally used in metal-air batteries. The electrolyte may be in the form of a liquid, a gel, or a solid.

### Advantageous Effects of Invention

According to the present invention, a conductive porous layer in which adhesion between the conductive porous substrate and the conductive layer is good, and pores in the conductive porous substrate and/or conductive porous layer are not deformed can be provided.

According to the present invention, by selecting the types of polymers contained in the first and second conductive layers in a manner such that the polymer contained in the first conductive layer has a glass transition temperature (Tg) higher than the glass transition temperature (Tg) of the polymer contained in the second conductive layer, a conductive porous layer having an improved adhesion between the first conductive layer and the second conductive layer can be provided.

According to another embodiment of the present invention (an embodiment using as the conductive carbon material contained in the second conductive layer, a conductive carbon material that is larger than the conductive carbon material contained in the first conductive layer), the first conductive layer and the second conductive layer have excellent adhesion. Further, even when the second conductive layer having a low glass transition temperature (Tg) is used, the pore diameter is large even after adhesion with the first conductive layer; therefore, the gas diffusivity and water drainability of the resulting conductive porous layer can be maintained.

### Brief Description of Drawings

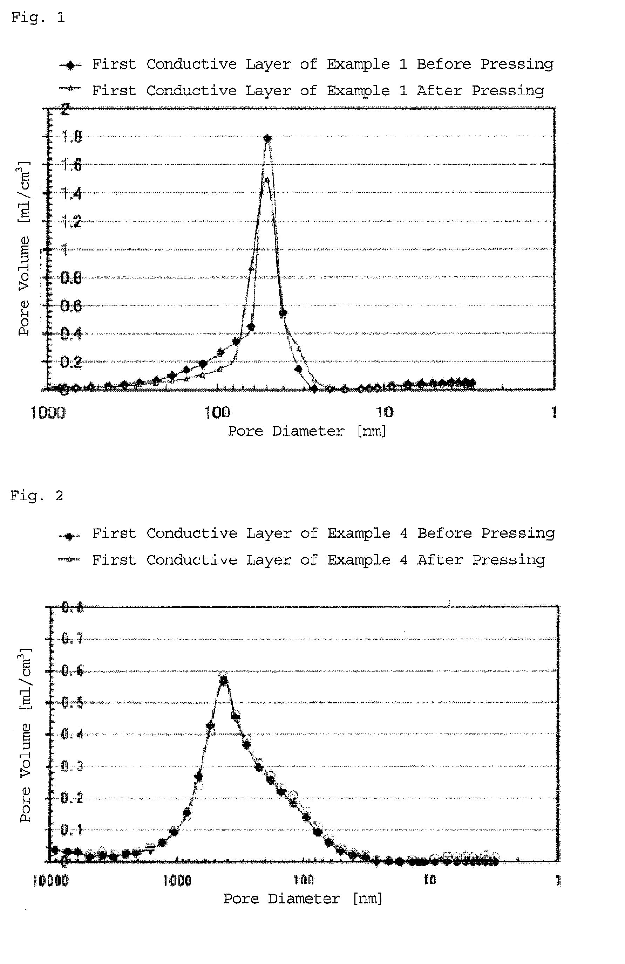

Fig. 1 is a graph showing the relationship between the diameter and volume of pores contained in the first conductive layer of Example 1 before and after pressing.
Fig. 2 is a graph showing the relationship between the diameter and volume of pores contained in the first conductive layer of Example 4 before and after pressing.

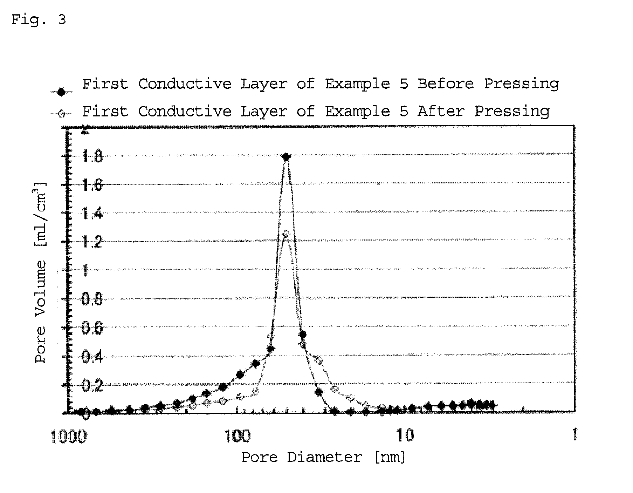

Fig. 3 is a graph showing the relationship between the diameter and volume of pores contained in the first conductive layer of Example 5 before and after pressing.

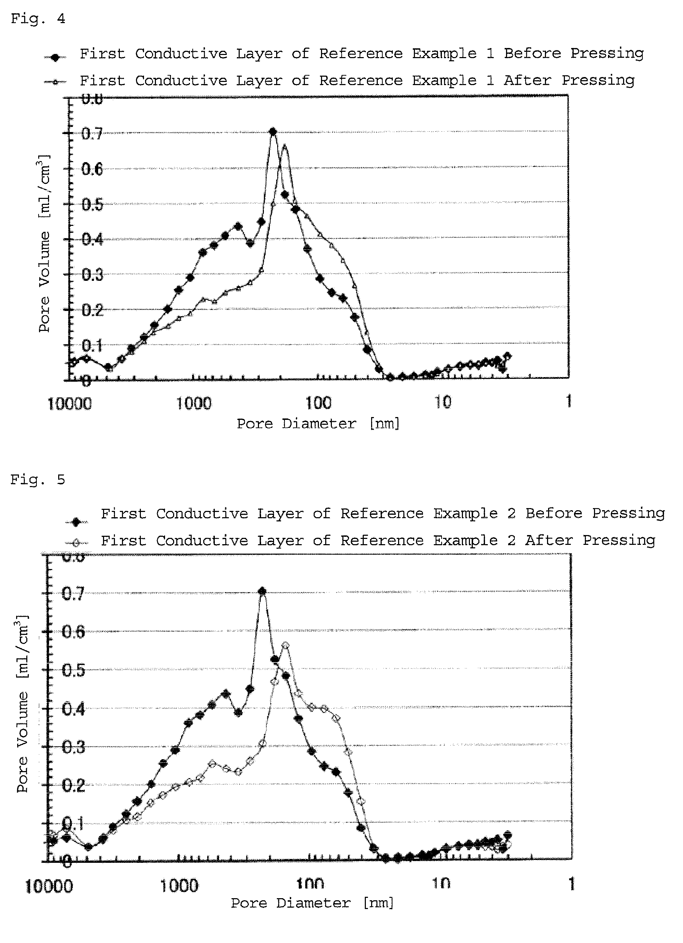

Fig. 4 is a graph showing the relationship between the diameter and volume of pores contained in the first conductive layer of Reference Example 1 before and after pressing.
Fig. 5 is a graph showing the relationship between the diameter and volume of pores contained in the first conductive layer of Reference Example 2 before and after pressing.

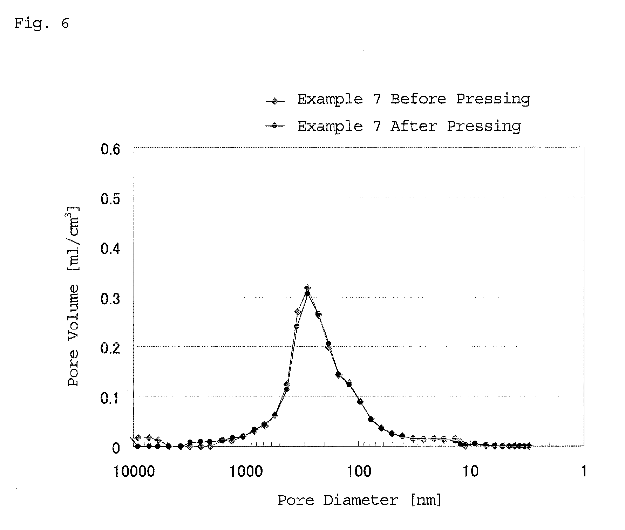

Fig. 6 is a graph showing the relationship between the diameter and volume of pores contained in the first conductive layer of Example 6 before and after pressing.

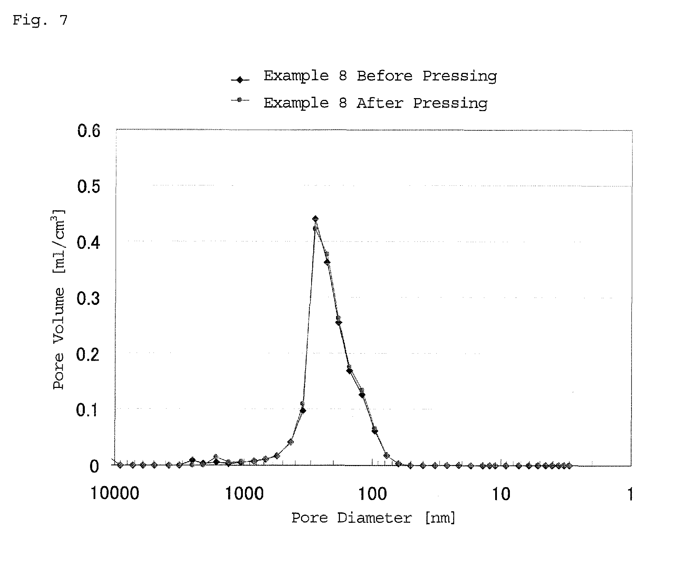

Fig. 7 is a graph showing the relationship between the diameter and volume of pores contained in the first conductive layer of Example 7 before and after pressing.

### Description of Embodiments

The present invention is explained in detail with reference to the Examples and Comparative Examples; however, the present invention is not limited to the following examples.

### <Materials>

The materials shown below were used for the preparation of the first conductive layer-forming paste composition and the second conductive layer-forming paste composition.
Conductive carbon particles: Furnace black (Balkan xc72R: produced by Cabot Corporation), average molecular weight: 1000 to 3000, average particle diameter: 30 nm
Polymer (1): Solef 21216/1001 (produced by Solvay Solexis Inc.; PVDF; solids content: 10 wt%), Tg: -30°C
Polymer (2): Vinyrol PSA AV6020 (produced by Showa Denko K.K.; acrylic adhesive), Tg: -60°C
Polymer (3): Shonol BRL-120Z (produced by Showa Denko K.K.; phenol resin; solids content: 70 wt%), Tg: 250°C
Polymer (4): Polytetrafluoroethylene (PTFE) (Rubron L5 produced by Daikin Industries Ltd.) Tg: about 130°C
Polymer (5): S-LEC K KW-3 (produced by Sekisui Chemical Co., Ltd., alkyl acetal polyvinyl alcohol; solids content: 20 wt%), Tg: 75°C Conductive carbon fibers (1) : VGCF (VGCF (registered trademark) (standard product): produced by Showa Denko K.K.; average fiber diameter: 150 nm, average fiber length: 10 to 20 µm, and average aspect ratio: 10 to 500)
Conductive carbon fibers (2): S241 (produced by Osaka Gas Chemical, Co., Ltd.; average fiber diameter: 13 µm, average fiber length: 130 µm, and average aspect ratio: 10)
Dispersant: Emulgen A-60 (produced by Kao Corporation)

### <Example 1>

### (i) First Conductive Layer

Polymer (1) was added to methyl ethyl ketone, and the mixture was stirred using a stirrer (media rotation speed: 300 rpm) at 80°C for 60 minutes, thereby obtaining a PVDF solution having a solids content (polymer (1)) of 10 wt% in which polymer (1) was dissolved in the methyl ethyl ketone. Conductive carbon particles (100 parts by weight), polymer (4) (50 parts by weight), the prepared PVDF solution having a solids content of 10 wt% (500 parts by weight, solids content: 50 parts by weight), polymer (3) (100 parts by weight, solids content: 70 parts by weight), and methyl ethyl ketone (1000 parts by weight) were subjected to media dispersion to prepare a first conductive layer-forming paste composition. The first conductive layer-forming paste composition was applied to a polyethylene terephthalate (PET) film including a release layer to a thickness of about 50 µm using an applicator. Regarding the viscosity of the paste composition, the shear viscosity was about 166 mPa·s at a shear rate of 1000 (1/s). Subsequently, drying was performed in a drying furnace set at 95°C for about 15 minutes to produce a first conductive layer (the Tg of polymer (3), which was contained in the largest amount among the polymers in the conductive layer, was 250°C). In the resulting first conductive layer, the polymers (polymers (1), (3), and (4)) were present with a higher density at the surface in contact with the substrate. The pore diameter peak of the resulting first conductive layer was 50 nm.

### (ii) Second Conductive Layer

Polymer (2) (100 parts by weight), conductive carbon fibers (1) (45 parts by weight), conductive carbon fibers (2) (60 parts by weight), and isopropyl alcohol (700 parts by weight) were subjected to media dispersion to prepare a second conductive layer-forming paste composition. The second conductive layer-forming paste composition was applied to a PET film including a release layer to a thickness of about 150 µm using an applicator. Regarding the viscosity of the paste composition, the shear viscosity was about 136 mPa·s at a shear rate of 1000 (1/s). Subsequently, drying was performed in a drying furnace set at 95°C for about 40 minutes to produce a second conductive layer (the Tg of the polymer contained in the conductive layer was -60°C). In the resulting second conductive layer, the polymer (polymer (2)) was present with a higher density at the surface in contact with the substrate. The pore diameter peak of the resulting second conductive layer was 835 nm.

### (iii) Conductive Porous Layer

The first conductive layer and the second conductive layer were each individually detached from the PET film including the release layer, and the surface of the first conductive layer having the polymers (polymers (1), (3), and (4)) with a higher density was disposed adjacent to the surface of the second conductive layer having the polymer (polymer (2)) with a lower density. Hot-pressing was then performed at a pressing temperature of 60°C and a pressing pressure of 10 kN, for a pressing time of 60 seconds to produce the conductive porous layer of Example 1.

### <Example 2>

### (i) First Conductive Layer

Two first conductive layers (the Tg of the polymer contained in the conductive layer was 250°C) were produced in the same manner as in Example 1 (i).

### (ii) Second Conductive Layer

A second conductive layer (the Tg of the polymer contained in the layer was -60°C) was produced in the same manner as in Example 1 (ii).

### (iii) Conductive Porous Layer

The first conductive layer and the second conductive layer were each individually detached from the PET film including the release layer, and the surface of the first conductive layer having the polymers (polymers (1), (3), and (4)) with a higher density was disposed adjacent to the surface of the second conductive layer having the polymer (polymer (2)) with a lower density. Subsequently, the surface of the other first conductive layer having the polymers with a lower density was disposed adjacent to the surface of the second conductive layer having the polymer with a higher density. Hot-pressing was then performed at a pressing temperature of 60°C and a pressing pressure of 10 kN, for a pressing time of 60 seconds to produce the conductive porous layer of Example 2.

### <Example 3>

### (i) First Conductive Layer

A first conductive layer (the Tg of the polymer contained in the layer was 250°C) was produced in the same manner as in Example 1 (i).

### (ii) Second Conductive Layer

A second conductive layer (the Tg of the polymer contained in the layer was -60°C) was produced in the same manner as in Example 1 (ii).

### (iii) Conductive Porous Layer

With the first conductive layer and the second conductive layer still attached to the PET film including the release layer, the surface of the first conductive layer having the polymers (polymers (1), (3), and (4)) with a lower density was disposed adjacent to the surface of the second conductive layer having the polymer (polymer (2)) with a lower density. Hot-pressing was then performed at a pressing temperature of 60°C and a pressing pressure of 20 kN, for a pressing time of 60 seconds. The PET film including the release layer was then detached from each layer to produce the conductive porous layer of Example 3.

### <Example 4>

### (i) First Conductive Layer

Conductive carbon particles (100 parts by weight), a PVDF solution having a solids content of 10 wt% (2000 parts by weight, solids content: 20 parts by weight) prepared in the same manner as in Example 1, polymer (4) (130 parts by weight), conductive carbon fibers (1) (100 parts by weight), and methyl ethyl ketone (1500 parts by weight) were subjected to media dispersion to prepare a first conductive layer-forming paste composition. The first conductive layer-forming paste composition was applied to a polyethylene terephthalate (PET) film including a release layer to a thickness of about 50 µm using an applicator. Regarding the viscosity of the paste composition, the shear viscosity was about 206 mPa·s at a shear rate of 1000 (1/s). Subsequently, drying was performed in a drying furnace set at 95°C for about 15 minutes to produce a first conductive layer (the Tg of polymer (1), which was contained in the largest amount among the polymers in the conductive layer, was -30°C). In the resulting first conductive layer, the polymers (polymers (1) and (4)) were present with a higher density at the surface in contact with the substrate. The pore diameter peak of the resulting first conductive layer was 433 nm.

### (ii) Second Conductive Layer

A second conductive layer (the Tg of the polymer contained in the conductive layer was -60°C) was produced in the same manner as in Example 1 (ii).

### (iii) Conductive Porous Layer

With the first conductive layer and the second conductive layer still attached to the PET film including the release layer, the surface of the first conductive layer having the polymers (polymers (1) and (4)) with a higher density was disposed adjacent to the surface of the second conductive layer having the polymer (polymer (2)) with a lower density. Hot-pressing was then performed at a pressing temperature of 30°C and a pressing pressure of 10 kN, for a pressing time of 60 seconds. The PET film including the release layer was then detached from each layer to produce the conductive porous layer of Example 4.

### <Comparative Example 1>

### (i) First Conductive Layer

A first conductive layer (the Tg of the polymer contained in the conductive layer was 250°C) was produced in the same manner as in Example 1 (i).

### (ii) Second Conductive Layer

Conductive carbon fibers (2) (100 parts by weight), a prepared PVDF solution having a solids content of 10 wt% (100 parts by weight, solids content: 10 parts by weight) prepared in the same manner as in Example 1, polymer (3) (20 parts by weight, solids content: 14 parts by weight), and methyl ethyl ketone (200 parts by weight) were subjected to media dispersion to prepare a second conductive layer-forming paste composition. The second conductive layer-forming paste composition was applied to a PET film including a release layer to a thickness of about 150 µm using an applicator. Regarding the viscosity of the paste composition, the shear viscosity was about 264 mPa·s at a shear rate of 1000 (1/s). Subsequently, drying was performed in a drying furnace set at 95°C for about 40 minutes to produce a second conductive layer (the Tg of the polymer (3), which was contained in the largest amount among the polymers in the conductive layer, was 250°C). In the resulting second conductive layer, the polymers (polymers (1) and (3)) were present with a higher density at the surface in contact with the substrate.

### (iii) Conductive Porous Layer

The first conductive layer and the second conductive layer were each individually detached from the PET film including the release layer, and the surface of the first conductive layer having the polymers (polymers (1), (3), and (4)) with a higher density was disposed adjacent to the surface of the second conductive layer having the polymers (polymers (1) and (3)) with a lower density. Hot-pressing was then performed at a pressing temperature of 60°C and a pressing pressure of 10 kN, for a pressing time of 60 seconds to produce the conductive porous layer of Comparative Example 1.

### <Reference Example 1>

### (i) First Conductive Layer

Conductive carbon particles (100 parts by weight), polymer (4) (50 parts by weight), polymer (2) (167 parts by weight), conductive carbon fibers (1) (76.7 parts by weight), and isopropanol (50 parts by weight) were subjected to media dispersion to prepare a first conductive layer-forming paste composition. The first conductive layer-forming paste composition was applied to a polyethylene terephthalate (PET) film including a release layer to a thickness of about 50 µm using an applicator. Regarding the viscosity of the paste composition, the shear viscosity was about 92 mPa·s at a shear rate of 1000 (1/s). Subsequently, drying was performed in a drying furnace set at 95°C for about 15 minutes to produce a first conductive layer (the Tg of polymer (2), which was contained in the largest amount among the polymers in the conductive layer, was -60°C). In the resulting first conductive layer, the polymers (polymers (2) and (4)) were present with a higher density at the surface in contact with the substrate. The pore diameter peak of the resulting first conductive layer was 227 nm.

### (ii) Second Conductive Layer

A second conductive layer (the Tg of the polymer contained in the layer was -60°C) was produced in the same manner as in Example 1 (ii).

### (iii) Conductive Porous Layer

The first conductive layer and the second conductive layer were each individually detached from the PET film including the release layer, and the surface of the first conductive layer having the polymers (polymers (2) and (4)) with a higher density was disposed adjacent to the surface of the second conductive layer having the polymer (polymer (2)) with a lower density. Hot-pressing was then performed at a pressing temperature of 60°C and a pressing pressure of 10 kN, for a pressing time of 60 seconds to produce the conductive porous layer of Reference Example 1.

### <Conductive Porous Layer Evaluation Test 1>

### 1. Adhesion

Using a medium-temperature press device (produced by Tester Sangyo, Co., Ltd.), adhesion between the first conductive layer and the second conductive layer in the conductive porous layers (size: 50 x 50 mm²) of Examples 1 to 3, Comparative Example 1, and Reference Example 1 was measured. (For Example 2, adhesion between both the first conductive layer and the second conductive layer was evaluated.)

Adhesion was subjectively evaluated as to whether layers were adhered together in a manner such that one layer was not detached from another layer. Specifically, adhesion was rated A or B.
A: Strongly adhered and difficult to detach layers with hands.
B: Easy to detach layers with hands, or no adhesion was observed. Table 1 shows the results.

### 2. Pore Diameter Peak and Pore Volume

Before and after pressing of the first and second conductive layers, the pore diameter peaks in the first conductive layer were measured (for Example 2, the same results were obtained in both of the first conductive layers.) Using a pore distribution measurement device, the diameter (nm) and volume (ml/cm³) of pores in the conductive layer were measured. Subsequently, the relationship between the pore diameter (nm) and pore volume (ml/cm³) was made into a graph based on the obtained values, and the pore diameter at which the pore volume becomes maximum was obtained as the "pore diameter peak."

Before and after the pressing of the first and second conductive layers, each of the pore volumes in the first conductive layer was measured to obtain a pore volume difference (pore volume before pressing - pore volume after pressing).

The pore volume was measured using an AutoPore IV 9520 pore distribution measurement device produced by Micromeritics, Co., Ltd. (Shimadzu Corporation).

Table 1 shows the results.

**Table 1**

| | | | | |
|---|---|---|---|---|
| Example 1 | A | 50 | 50 | 0 |
| Example 2 | A | 50 | 50 | 0 |
| Example 3 | A | 50 | 50 | 0.05 |
| Example 4 | A | 433 | 433 | 0 |
| Comparative Example 1 | B | 50 | 50 | 0 |
| Reference Example 1 | A | 227 | 182 | 0.2 |

### <Example 5>

The second conductive layer produced in Example 1, which was cut to a size of 50 x 50 mm², was detached from the PET film, and the surface of the second conductive layer having the polymer (polymer (2)) with a higher density was disposed on a portion where a flow channel of a metal separator, which was coated with gold after the formation of the flow channel on a stainless steel substrate, was formed. Further, the first conductive layer produced in Example 1, which was cut to a size of 50 x 50 mm², was disposed on the second conductive layer in a manner such that the surface of the first conductive layer having the polymers (polymers (1), (3), and (4)) with a higher density was disposed on the second conductive layer. Hot-pressing was then performed at a pressing temperature of 60°C and a pressing pressure of 20 kN, for a pressing time of 60 seconds to produce the conductive porous layer-metal separator assembly of Example 5.

### <Comparative Example 2>

The second conductive layer produced in Comparative Example 1, which was cut to a size of 50 x 50 mm², was detached from the PET film, and the surface of the second conductive layer having the polymers (polymers (1) and (3)) with a higher density was disposed on the same portion as Example 4 where the flow channel of the metal separator was formed. Further, the first conductive layer produced in Comparative Example 1, which was cut to a size of 50 x 50 mm², was disposed on the second conductive layer in a manner such that the surface of the first conductive layer having the polymers (polymers (1), (3), and (4)) with a higher density was disposed on the second conductive layer. Hot-pressing was then performed at a pressing temperature of 60°C and a pressing pressure of 20 kN, for a pressing time of 60 seconds to produce the conductive porous layer-metal separator assembly of Comparative Example 2.

### <Reference Example 2>

The second conductive layer produced in Reference Example 1, which was cut to a size of 50 x 50 mm², was detached from the PET film, and the surface of the second conductive layer having the polymer (polymer (2)) with a higher density was disposed on the same portion as Example 4 where the flow channel of the metal separator was formed. Further, the first conductive layer produced in Reference Example 1, which was cut to a size of 50 x 50 mm², was disposed on the second conductive layer in a manner such that the surface of the first conductive layer having the polymers (polymers (2) and (4)) with a higher density was disposed on the second conductive layer. Hot-pressing was then performed at a pressing temperature of 60°C and a pressing pressure of 20 kN, for a pressing time of 60 seconds to produce the conductive porous layer-metal separator assembly of Reference Example 2.

### <Example 6>

The first conductive layer produced in Example 1 was prepared.

The second conductive layer-forming paste composition was prepared in the same manner as in the second conductive layer of Example 1. The second conductive layer-forming paste composition was applied to a PET film including a release layer to a thickness of about 10 µm using an applicator. Subsequently, drying was performed in a drying furnace set at 95°C for about 40 minutes to produce a second conductive layer (the Tg of polymer contained in the conductive layer was -60°C). In the resulting second conductive layer, the polymer (polymer (2)) was present with a higher density at the surface in contact with the substrate.

A catalyst layer laminated membrane was produced as shown below.

4 g of platinum catalyst-supporting carbon particles ("TEC10E50E" produced by Tanaka Kikinzoku Kogyo), 40 g of an ion-conductive polyelectrolyte solution (Nafion 5 wt% solution: "DE-520" produced by Du Pont, Inc.), 12 g of distilled water, 20 g of n-butanol, and 20 g of t-butanol were added together and mixed while stirring using a disperser, thereby obtaining an anode catalyst layer-forming paste composition and a cathode catalyst layer-forming paste composition.

The anode catalyst layer-forming paste composition and the cathode catalyst layer-forming paste composition were each individually applied to a transfer substrate (material: polyethylene terephthalate film) using an applicator, and dried at 95°C for 30 minutes to form catalyst layers, thereby obtaining an anode catalyst layer-forming transfer sheet and a cathode catalyst layer-forming transfer sheet. The coating amount of the catalyst layer was determined so that each of the anode catalyst layer and the cathode catalyst layer had a platinum-supporting amount of about 0.45 mg/cm².

Using the anode catalyst layer-forming transfer sheet and the cathode catalyst layer-forming transfer sheet produced above, the front and back surface of the electrolyte membrane ("NR-212" produced by Du Pont, Inc.; film thickness: 50 µm) was hot-pressed at 135°C and 5 MPa for 2 minutes, and then only the transfer substrates were detached. The catalyst layer laminated membrane was thus produced.

The second conductive layer cut to a size of 50 x 50 mm² was detached from the PET film, and the surface of the second conductive layer having the polymer (polymer (2)) with a higher density was disposed on the catalyst layer surface of the catalyst layer laminated membrane. Further, the first conductive layer cut to a size of 50 x 50 mm² was disposed on the second conductive layer in a manner such that the surface of the first conductive layer having the polymers (polymers (1), (3), and (4)) with a higher density was disposed on the second conductive layer. Hot-pressing was then performed at a pressing temperature of 60°C and a pressing pressure of 20 kN, for a pressing time of 60 seconds to produce the conductive porous layer-catalyst layer laminated membrane of Example 6.

### <Evaluation Test 2>

### 1. Adhesion

Using a medium-temperature press device (produced by Tester Sangyo, Co., Ltd.), adhesion between the second conductive layer and metal separator in the conductive porous layer-metal separator assemblies (size: 50 x 50 mm²) of Example 5, Comparative Example 2, and Reference Example 2 was measured.

Using a medium-temperature press device (produced by Tester Sangyo, Co., Ltd.), adhesion between the second conductive layer and catalyst layer in the conductive porous layer-catalyst layer laminated membrane (size: 50 x 50 mm²) of Example 6 was measured.

Adhesion was subjectively evaluated as to whether the layers were adhered together in a manner such that the second conductive layer was not detached from the metal separator or catalyst layer laminated membrane. Specifically, adhesion was rated A or B.
A: Strongly adhered and difficult to detach layers with hands.
B: Easy to detach layers with hands, or no adhesion was observed. Table 2 shows the results.

### 2. Pore Diameter Peak and Pore Volume

Before and after the bonding of the conductive porous layer and the metal separator or catalyst layer laminated membrane, the pore diameter peaks in the first conductive layer were measured in the same manner as in Evaluation Test 1.

Before and after the bonding of the conductive porous layer and the metal separator or catalyst layer laminated membrane, each of the pore volumes in the first conductive layer was measured to obtain a pore volume difference (pore volume before pressing - pore volume after pressing). The pore volume was measured in the same manner as in Evaluation Test 1.

Table 2 shows the results.

**Table 2**

| | Adhesion State | Pore Diameter Peak (nm) | | Difference in Pore Volume (ml/cm³) |
|---|---|---|---|---|
| | | Before Pressing | After Pressing | |
| Example 5 | A | 50 | 50 | 0.05 |
| Comparative Example 2 | B | 50 | 50 | 0.05 |
| Reference Example 2 | A | 227 | 151 | 0.28 |
| Example 6 | A | 50 | 50 | 0.05 |

### <Example 7>

### (i) First Conductive Layer

Conductive carbon particles (100 parts by weight), a PVDF solution having a solids content of 10 wt% (1000 parts by weight, solids content: 100 parts by weight) produced in the same manner as in Example 1, polymer (4) (130 parts by weight), conductive carbon fibers (1) (100 parts by weight), and methyl ethyl ketone (1800 parts by weight) were subjected to media dispersion to prepare a first conductive layer-forming paste composition. The first conductive layer-forming paste composition was applied to a polyethylene terephthalate (PET) film including a release layer to a thickness of about 50 µm using an applicator. Subsequently, drying was performed in a drying furnace set at 95°C for about 15 minutes to produce a first conductive layer (the Tg of polymer (4), which was contained in the largest amount among the polymers in the conductive layer, was 130°C). In the resulting first conductive layer, the polymers (polymers (1) and (4)) were present with a higher density at the surface in contact with the substrate. The pore diameter peak of the resulting first conductive layer was 283 nm.

### (ii) Second Conductive Layer

Polymer (5) (250 parts by weight, solids content: 50 parts by weight), conductive carbon fibers (1) (45 parts by weight), conductive carbon fibers (2) (60 parts by weight), and water (400 parts by weight) were subjected to media dispersion to prepare a second conductive layer-forming paste composition. The second conductive layer-forming paste composition was applied to a PET film including a release layer to a thickness of about 150 µm using an applicator. Subsequently, drying was performed in a drying furnace set at 95°C for about 40 minutes to produce a second conductive layer (the Tg of the polymer contained in the conductive layer was 75°C). In the resulting second conductive layer, the polymer (polymer (5)) was present with a higher density at the surface in contact with the substrate.

### (iii) Conductive Porous Layer

The first conductive layer and the second conductive layer were each individually detached from the PET film including the release layer, and the surface of the first conductive layer having the polymers (polymers (1) and (4)) with a higher density was disposed adjacent to the surface of the second conductive layer having the polymer (polymer (5)) with a lower density. Hot-pressing was then performed at a pressing temperature of 100°C and a pressing pressure of 10 kN, for a pressing time of 60 seconds to produce the conductive porous layer of Example 7.

### <Example 8>

### (i) First Conductive Layer

Conductive carbon particles (100 parts by weight), polymer (5) (1000 parts by weight, solids content: 200 parts by weight), conductive carbon fibers (1) (100 parts by weight), and water (2000 parts by weight) were subjected to media dispersion to prepare a first conductive layer-forming paste composition. The first conductive layer-forming paste composition was applied to a polyethylene terephthalate (PET) film including a release layer to a thickness of about 50 µm using an applicator. Subsequently, drying was performed in a drying furnace set at 95°C for about 15 minutes to produce a first conductive layer (the Tg of polymer (5), which was contained in the largest amount among the polymers in the conductive layer, was 75°C). In the resulting first conductive layer, the polymer (polymer (5)) was present with a higher density at the surface in contact with the substrate. The pore diameter peak of the resulting first conductive layer was 282 nm.

### (ii) Second Conductive Layer

A PVDF solution having a solids content of 10 wt% (500 parts by weight, solids content: 50 parts by weight) produced in the same manner as in Example 1, conductive carbon fibers (2) (60 parts by weight), conductive carbon fibers (1) (45 parts by weight), and methyl ethyl ketone (500 parts by weight) were subjected to media dispersion to prepare a second conductive layer-forming paste composition. The second conductive layer-forming paste composition was applied to a PET film including a release layer to a thickness of about 150 µm using an applicator. Subsequently, drying was performed in a drying furnace set at 95°C for about 40 minutes to produce a second conductive layer (the Tg of the polymer contained in the conductive layer was -30°C). In the resulting second conductive layer, the polymer (polymer (1)) was present with a higher density at the surface in contact with the substrate.

### (iii) Conductive Porous Layer

The first conductive layer and the second conductive layer were each individually detached from the PET film including the release layer, and the surface of the first conductive layer having the polymer (polymer (5)) with a higher density was disposed adjacent to the surface of the second conductive layer having the polymer (polymer (1)) with a lower density. Hot-pressing was then performed at a pressing temperature of 60°C and a pressing pressure of 10 kN, for a pressing time of 60 seconds to produce the conductive porous layer of Example 8.

### <Conductive Porous Layer Evaluation Test 3>

In the same manner as in conductive porous layer Evaluation Test 1, the adhesion of Examples 7 and 8, and the pore diameter peaks and pore volumes in the first conductive layers of Examples 7 and 8 were measured. Table 3 shows the results.

| | Adhesion State | Pore Diameter Peak (nm) | | Difference in Pore Volume (ml/cm³) |
|---|---|---|---|---|
| | | Before Pressing | After Pressing | |
| Example 7 | A | 283 | 283 | 0.01 |
| Example 8 | A | 282 | 282 | 0.02 |

## Claims

1. A conductive porous layer for batteries comprising a laminate comprising a first conductive layer and a second conductive layer,
the first conductive layer containing a conductive carbon material and a polymer,
the second conductive layer containing a conductive carbon material and a polymer, and
the polymer contained in the first conductive layer having a glass transition temperature (Tg) 30°C or more higher than the glass transition temperature (Tg) of the polymer contained in the second conductive layer.

2. The conductive porous layer for batteries according to claim 1, wherein the glass transition temperature (Tg) of the polymer contained in the first conductive layer is -100 to 300°C, and the glass transition temperature (Tg) of the polymer contained in the second conductive layer is -100 to 300°C.

3. The conductive porous layer for batteries according to claim 1, wherein the glass transition temperature (Tg) of the polymer contained in the first conductive layer is 50°C or more higher than the glass transition temperature (Tg) of the polymer contained in the second conductive layer.

4. The conductive porous layer for batteries according to any one of claims 1 to 3, wherein the conductive carbon material contained in the first conductive layer and the conductive carbon material contained in the second conductive layer each have an average fiber diameter and/or average particle diameter satisfying any one of the following conditions (i) to (iv):
(i) the conductive carbon material contained in the first conductive layer comprises conductive carbon fibers, the conductive carbon material contained in the second conductive layer comprises conductive carbon fibers, and the average fiber diameter of the conductive carbon fibers contained in the second conductive layer is larger than the average fiber diameter of the conductive carbon fibers contained in the first conductive layer;
(ii) the conductive carbon material contained in the first conductive layer comprises conductive carbon particles, the conductive carbon material contained in the second conductive layer comprises conductive carbon fibers, and the average fiber diameter of the conductive carbon fibers contained in the second conductive layer is larger than the average particle diameter of the conductive carbon particles contained in the first conductive layer;
(iii) the conductive carbon material contained in the first conductive layer comprises conductive carbon fibers, the conductive carbon material contained in the second conductive layer comprises conductive carbon particles, and the average particle diameter of the conductive carbon particles contained in the second conductive layer is larger than the average fiber diameter of the conductive carbon fibers contained in the first conductive layer; and
(iv) the conductive carbon material contained in the first conductive layer comprises conductive carbon particles, the conductive carbon material contained in the second conductive layer comprises conductive carbon particles, and the average particle diameter of the conductive carbon particles contained in the second conductive layer is larger than the average particle diameter of the conductive carbon particles contained in the first conductive layer.

5. The conductive porous layer for batteries according to any one of claims 1 to 4, wherein the second conductive layer has a pore diameter peak higher than the pore diameter peak of the first conductive layer.

6. The conductive porous layer for batteries according to any one of claims 1 to 5 satisfying at least one of the following conditions (A) and (B):
(A) the polymer in the first conductive layer is present with a higher density at the surface in contact with the second conductive layer than at the surface not in contact with the second conductive layer, and
(B) the polymer in the second conductive layer is present with a higher density at the surface in contact with the first conductive layer than at the surface not in contact with the first conductive layer.

7. The conductive porous layer for batteries according to claim 6 satisfying both of the conditions (A) and (B).

8. The conductive porous layer for batteries according to any one of claims 1 to 5 satisfying both of the following conditions (A') and (B'):
(A') the polymer in the first conductive layer is present with a higher density at the surface not in contact with the second conductive layer than at the surface in contact with the second conductive layer, and
(B') the polymer in the second conductive layer is present with a higher density at the surface not in contact with the first conductive layer than at the surface in contact with the first conductive layer.

9. The conductive porous layer for batteries according to any one of claims 1 to 8, wherein the conductive porous layer for batteries is a gas diffusion layer for fuel cells or a conductive porous layer for metal-air batteries.

10. A method for producing a conductive porous layer for batteries, comprising the steps of:
(I) producing a first conductive layer using a first conductive layer-forming paste composition containing a conductive carbon material and a polymer, and
(II) producing a second conductive layer using a second conductive layer-forming paste composition containing a conductive carbon material and a polymer,
the polymer contained in the first conductive layer having a glass transition temperature (Tg) 30°C or more higher than the glass transition temperature (Tg) of the polymer contained in the second conductive layer.

11. The method according to claim 10, wherein the glass transition temperature (Tg) of the polymer contained in the first conductive layer is 50°C or more higher than the glass transition temperature (Tg) of the polymer contained in the second conductive layer.

12. A membrane-electrode assembly for fuel cells comprising a catalyst layer laminated membrane and at least one of the conductive porous layers for batteries according to any one of claims 1 to 9,
the catalyst layer laminated membrane comprising a catalyst layer, an electrolyte membrane, and a catalyst layer that are sequentially laminated,
the conductive porous layer for batteries being disposed on one side or both sides of the catalyst layer laminated membrane.

13. A battery comprising the membrane-electrode assembly for fuel cells according to claim 12.
